Europäisches Patentamt

European Patent Office

Office européen des brevets

(19)

(11) Publication number: **0 437 888 B1**

# EUROPEAN PATENT SPECIFICATION

(45) Date of publication of patent specification: **15.11.95**

(51) Int. Cl.⁶: **B01D 1/16**, C11D 11/02

(21) Application number: **90203444.6**

(22) Date of filing: **21.12.90**

The file contains technical information submitted after the application was filed and not included in this specification

(54) **Computer-controlled spray-dying process.**

(30) Priority: **16.01.90 GB 9000893**

(43) Date of publication of application:
**24.07.91 Bulletin 91/30**

(45) Publication of the grant of the patent:
**15.11.95 Bulletin 95/46**

(84) Designated Contracting States:
**CH DE ES FR GB IT LI NL SE**

(56) References cited:
**EP-A- 0 033 144**
**DE-A- 2 707 688**

**PATENT ABSTRACTS OF JAPAN vol. 13, no. 372 (C-627)(3720) 17 August 1989**

**REGELUNGSTECHNISCHE PRAXIS no. 11, 1977,MUENCHEN,GERMANY, pp. 328 - 331, P.A. FINK et al.:"Automatisierung eines Scheiben-Zerstäubungstrockners mittels Prozessrechner"**

(73) Proprietor: **UNILEVER N.V.**
**Weena 455**
**NL-3013 AL Rotterdam (NL)**

(84) Designated Contracting States:

CH DE ES FR IT LI NL SE

(73) Proprietor: **UNILEVER PLC**
**Unilever House**
**Blackfriars**
**P.O. Box 68**
**London EC4P 4BO (GB)**

(84) Designated Contracting States:
**GB**

(72) Inventor: **Kerslake, Andrew John**
**59 Arrowe Park Road**
**Upton,**
**Wirral (GB)**
Inventor: **Proudfoot, Christopher George**
**Ouarry Road East,**
**Bebington**
**Wirral,**
**Merseyside (GB)**

(74) Representative: **Geary, Stephen et al**
**Unilever Plc,**
**Patent Division,**
**Colworth House**
**Sharnbrook,**
**Bedford MK44 1LO (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to a spray-drying process. More in particular, it relates to a computer-controlled spray-drying process wherein the moisture content of the powder obtained is automatically maintained at a pre-set value by regulating the flow of drying air and/or the temperature thereof.

Spray-drying towers are used in industry for large scale conversion of slurries or solutions to form powders. In the detergents industry, for instance, they are used to produce the base powder for detergent powders. Another example is the diary industry, where spray-drying towers are used to manufacture milk powder.

In a typical spray-drying process in the detergents industry, a concentrated solution or slurry of detergent compounds is pumped to one or more nozzles which are located in the upper part of the spray-drying tower. The solution or slurry leaves the nozzles in the form of droplets which start to accelerate in downward direction under the influence of gravity. At the same time, a flow of hot dry air is fed to the bottom of the tower. As the droplets travel down the tower they are gradually dried and at the bottom of the tower a powder is collected.

The physical properties of the powder, such as moisture content, bulk density or particle porosity, are largely influenced by the conditions in the tower, such as the temperature of the drying air, the air flow rate, the slurry flow rate, and by the dimensions of the tower and its nozzles. Once an optimal set of spray-drying conditions has been found, it is important to keep these conditions constant in order to achieve a constant quality of the powder produced. This, however, proves to be impossible as not all variables can be directly controlled at the same time.

Therefore, the operator of a spray-drying plant usually compensates a variation in a powder property, e.g. the moisture content, by varying one process parameter, e.g. the flow of hot air through the tower. An experienced operator can thereby achieve reasonably constant moisture content over a number of hours.

However, is not only important to achieve a constant moisture content. The resultant powder should also have a moisture content which in absolute terms corresponds to the desired value as closely as possible. Especially when further processing steps are envisaged after spray-drying, such as one or more densification steps, a slightly deviating moisture content may be a considerable disadvantage because such steps can be quite sensitive to the moisture content of the starting material.

Furthermore, it is difficult to achieve the set point for the moisture content within a short period after start-up of the spray-drying process only by manually adjusting the flow of air through the tower. As a consequence, considerable quantities of base powder are produced which do not completely comply with the required specifications and have to be discarded.

Various attempts have been made to automatically control a spray-drying process. The Russian patent publication 827924 discloses a method of automatically controlling a spray-drying process by means of regulators which derive their input from a dampness transducer and a bulk density transducer, and act upon the slurry flow rate and the rate of fuel consumption for the drying air. In this type of control process only the actual values of the measured input parameters are used to instantly control the output variables. Because the delay in such feed-back loops may be considerable, this type of control does not function very satisfactorily.

The British patent application 2 004 393 discloses a similar drying process whereby the powder moisture content of a material such as powdered milk is automatically controlled as a function of the heat input during the drying process. The wide variation on a short term basis of the powder moisture content makes it difficult to control the process. This problem is overcome by performing a number of measurements of the moisture content, determining an average value thereof and treating said average value as an actual measurement of the powder moisture content.

Drying '85 contains an article on "Control and Energy Aspects of Milk Powder Spray-Drying in relation to Product quality" at pages 244-248. This article is directed to the recovery of heat in the spray drying of milk powder without affecting the products quality. The control method requires that the inlet air temperature in the spray-drying process is maintained at a constant level. There is no reference to varying the flow rate or temperature of the drying air in order to control the moisture content of the powder.

It is now an object of the present invention to provide an improved automatically controlled spray-drying process, especially a process which does not have the above-mentioned drawbacks.

We have now found that this object may be achieved by the spray-drying process of the invention, whereby the moisture content of the powder obtained is automatically maintained at a pre-set level of measuring its current-value and feeding it to a computer which at least controls the flow of drying air and/or the temperature thereof as a function of past values of said flow and/or temperature, and as a function of current and past values of the moisture content.

EP 0 437 888 B1

It is preferred that the flow of drying air and/or the temperature thereof is also controlled as a function of current and past values of the slurry flow rate.

Preferably, the computer calculates the flow of drying air and/or the temperature thereof from linear combinations of said current and past values.

In the process of the invention, the moisture content of the spray-dried powder is continuously or at least periodically measured. The current moisture content may be determined in a number of ways. It was found to be particularly suitable to determine the moisture content constantly on-line by means of infrared spectroscopy. Commercially available infrared sensors can be used for this purpose, for instance the sensors manufactured by Infrared Engineering Ltd., U.K.

The information on the moisture content is then fed into a computer which calculates the control action which is necessary to keep the moisture content constant or to bring it to the desired value. There are no special requirements with regard to the type of computer. In principle any suitable type of computer can be used, such as a mini-computer, e.g. a DEC PDP-11, or even a micro-computer. The computer must be capable of storing and executing a program comprising a so-called controller, an algorithm which defines an output for a process actuator as a function of one or more measured process variables in order to regulate a particular output variable to a desired value.

The controller constitutes a simple empirical relationship between current and past process parameters and process actuators. In its most simple form it may be a linear combination of such variables. It is specific for a particular spray-drying plant, so a new controller has to be designed for every plant where the process of the invention is to be installed.

The controller for a specific spray-drying process may be designed on the same computer as used to control the process. To design the controller, the following procedures are used. First, the spray drying process is carried out for a period of time between one and eight hours long whereby the flow of drying air and/or the temperature thereof is perturbed about its steady state operating level. It is important that this perturbation is not correlated with the measured moisture content signal, which may be advantageously effected by using a pseudo-random binary sequence (PRBS) generated by means of a computer program. To design the feed forward controller a similar perturbation sequence is applied to the slurry flow rate.

Whilst the perturbations are being applied the values of powder moisture content, quench fan speed and/or temperature of the drying air and the slurry flow rate are measured and stored at regular intervals for future analysis. It is important that all the stored data are synchronized to a common time reference.

The second stage of the controller design involves establishing an empirical mathematical relationship (or model), which relates changes of the flow of drying air and/or the temperature thereof and changes of slurry flow rate to the measured powder moisture content. This relationship can be derived using recursive least squares identification techniques to identify parameters of a linear model.

In the third stage of the controller design procedure the mathematical model thus derived is used to design an optimal controller. Dynamic programming techniques are employed to minimize a weighted cost function based on a summation of the error squared and the square of the incremental control action. The optimized controller can then be implemented on-line to automatically control the powder moisture content in the spray-drying process.

The man skilled in the art will have no difficulty in designing suitable computer programs for application in the process of the present invention. We found it advantageous to make use of a number of programs or a software package. Ideally, the package should allow the designing of optimal feed back and feed forward controllers using data logged from the plant, as well as provide the facilities to collect and store these data and implement the controllers. It is possible - and this is especially preferred - to design the software package such that it has a general applicability, including the ability to assist in the design of controllers for single loop industrial processes as well as for complex plants (possibly multi-variable). It is even feasible to build in the capacity of controlling whole plants consisting of many different loops of varying complexity. The controller parameters can, if necessary, be retuned on-line using a self-tuning facility.

The computer controlled spray-drying process according to the present invention was found to be of particular use in the manufacture of detergent (base) powders whereby the moisture content is an important factor for obtaining detergent powders having good powder properties.

The process of the present invention will now be further illustrated by means of the following examples and the accompanying figures, in which:

Figure 1 is a schematic view of a spray-drying plant in which the process of the invention can be carried out;

Figure 2 shows the operation of the process of the present invention using controller of E1 for a period of 11 hours;

Figure 3 shows the response of a feed-back only moisture controller for a period of one hour;

3

Figure 4 shows the operation of a feed-back plus feed forward controller for a period of one hour;

Figure 5 is a detail of Fig. 2 showing the operation of the controller of E1 for a period 4 hours;

Figure 6 shows manual operation for a period of 4 hours;

Figure 7 shows another period of manual operation for 4 hours;

Figure 8 shows a two hour period of manual control; and

Figure 9 shows the response in the operation of a feed back plus feed forward controller.

EXAMPLE 1

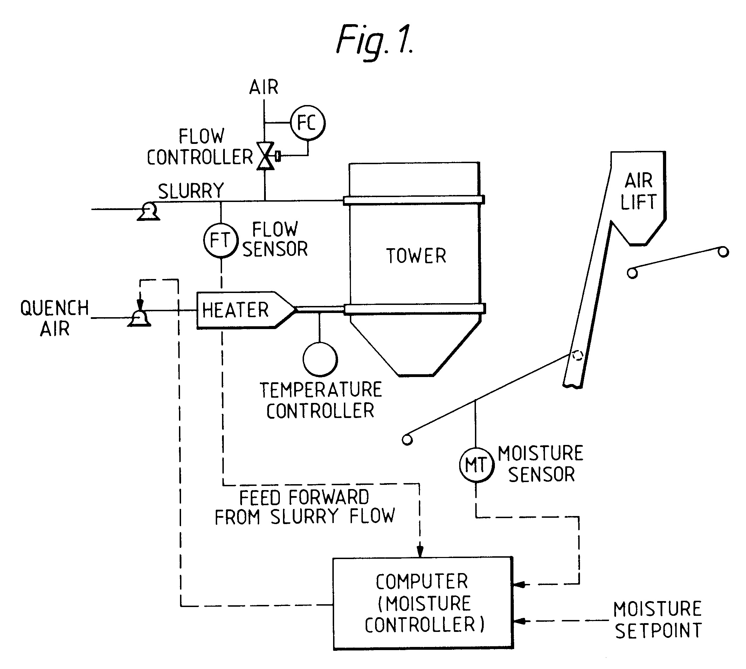

Figure 1 shows an example of a spray-drying plant for the manufacture of a detergent base powder, on which the process of the invention can be implemented. The figure also indicates the way in which the computer system was interfaced to the plant for this application. The tower was of standard counter-current design. The moisture content of the base powder leaving the tower was continuously measured using an Infrared Engineering (Trade Mark) infrared meter. The flow of hot drying air into the tower was adjusted by varying the speed of the quench fan to the heater and the inlet air temperature was controlled using a regulator which acts on the fuel flow to the heater. The vacuum in the tower was automatically controlled by means of a regulator acting on the exhaust gas damper.

First, a feedback controller for powder moisture content was designed, whereby the quench fan speed was taken as manipulated variable. After on-line tuning the following controller (E1) was derived:

$$U_t = U_{t-64} + [0.62\ 0.19\ 0.27] \begin{vmatrix} Y_t & - W_t \\ Y_{t-32} & - W_t \\ Y_{t-64} & - W_t \end{vmatrix}$$

$$+ [-0.66\ -0.59\ -0.65\ -0.54\ -0.30\ -0.17\ -0.24\ -0.08]$$

$$\begin{vmatrix} U_{t-64} & - U_{t-128} \\ U_{t-128} & - U_{t-192} \\ U_{t-192} & - U_{t-256} \\ U_{t-256} & - U_{t-320} \\ U_{t-320} & - U_{t-384} \\ U_{t-384} & - U_{t-448} \\ U_{t-448} & - U_{t-512} \\ U_{t-512} & - U_{t-576} \end{vmatrix}$$

in which:

$Y_t$ = moisture measurement at time t seconds

$W_t$ = moisture set point at time t seconds

$U_t$ = quench fan speed at time t seconds

Examination of equation 1 shows that the last significant term in the contribution to the final control action $U_t$ of the past control increments is the term $0.24^*$ $(U_{t-448} - U_{t-512})$. This indicates that a change in quench fan speed continues to have an effect on powder moisture content for approximately 7.5 minutes (448 seconds).

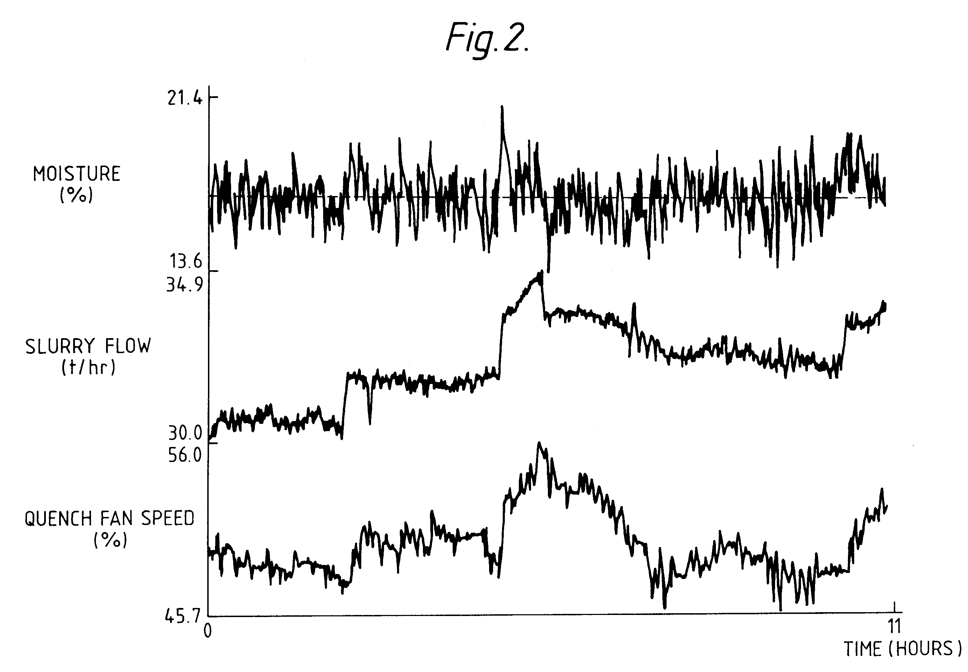

The operation of this controller (E1) is shown in Fig.2 which gives time histories of powder moisture content, slurry flow rate and quench fan speed for an 11-hour period. It is seen that, despite several load changes (of 1 or 2 lances), good regulatory behaviour was achieved. Statistics for the period of operation shown in Fig. 2 are given in Table I.

Table I

| 11-hour period of feedback moisture control | | | | |
|---|---|---|---|---|
| | Moisture Setpoint | Moisture Content | Slurry Flow (t/hr) | Quench Fan Speed (%) |
| Mean value (%)<br>Standard deviation | 17<br>- | 17.2<br>1.20 | 32.2<br>1.12 | 50.0<br>1.84 |

EXAMPLE 2

For larger load changes than those encountered during the period shown in Fig. 2, i.e. changes of greater than approx. 2 lances, the performance of the feed-back moisture controller (E1) was found to deteriorate as the controller could not adjust the quench fan speed at a fast enough rate. This problem could be overcome by a feed-back plus feed-forward controller whereby the quench fan speed was taken as manipulated variable and feed-forward information from the slurry flow was used. Figure 1 schematically illustrates this combined feed-forward and feed-backward control.

The combined feed-back plus feed-forward controller was developed and tested on-line; after simplification and on-line tuning this became (E2):

$$U_t = U_{t-64} + [0.68\ 0.19\ 0.32] \begin{vmatrix} Y_t & - W_t \\ Y_{t-32} & - W_t \\ Y_{t-64} & - W_t \end{vmatrix}$$

$$+ [-0.20\ -0.13\ -0.19\ -0.03\ -0.12\ -0.08\ -0.14] \begin{vmatrix} U_{t-64} & - U_{t-128} \\ U_{t-128} & - U_{t-192} \\ U_{t-192} & - U_{t-256} \\ U_{t-256} & - U_{t-320} \\ U_{t-320} & - U_{t-384} \\ U_{t-384} & - U_{t-448} \\ U_{t-448} & - U_{t-512} \end{vmatrix}$$

$$+ [0.31\ 0.33\ 0.11\ 0.09\ 0.12\ 0.21\ 0.07] \begin{vmatrix} V_t & - V_{t-64} \\ V_{t-64} & - V_{t-128} \\ V_{t-128} & - V_{t-192} \\ V_{t-192} & - V_{t-256} \\ V_{t-256} & - V_{t-320} \\ V_{t-320} & - V_{t-384} \\ V_{t-384} & - V_{t-448} \end{vmatrix}$$

in which:

$Y_t$ =    moisture measurement at time t seconds

$W_t$ = moisture setpoint at time t seconds
$U_t$ = quench fan speed at time t seconds
$V_t$ = slurry flow rate at time t seconds

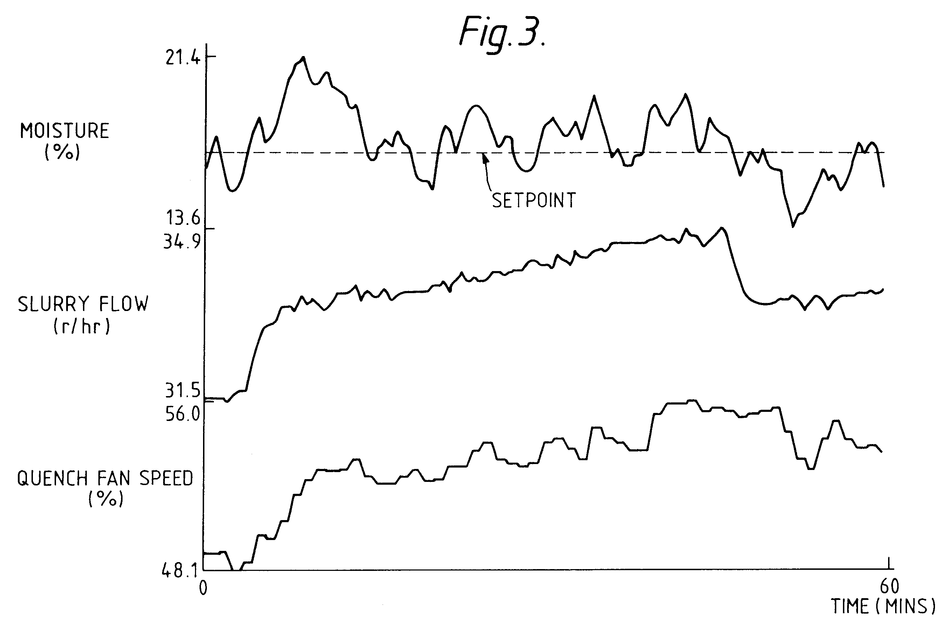

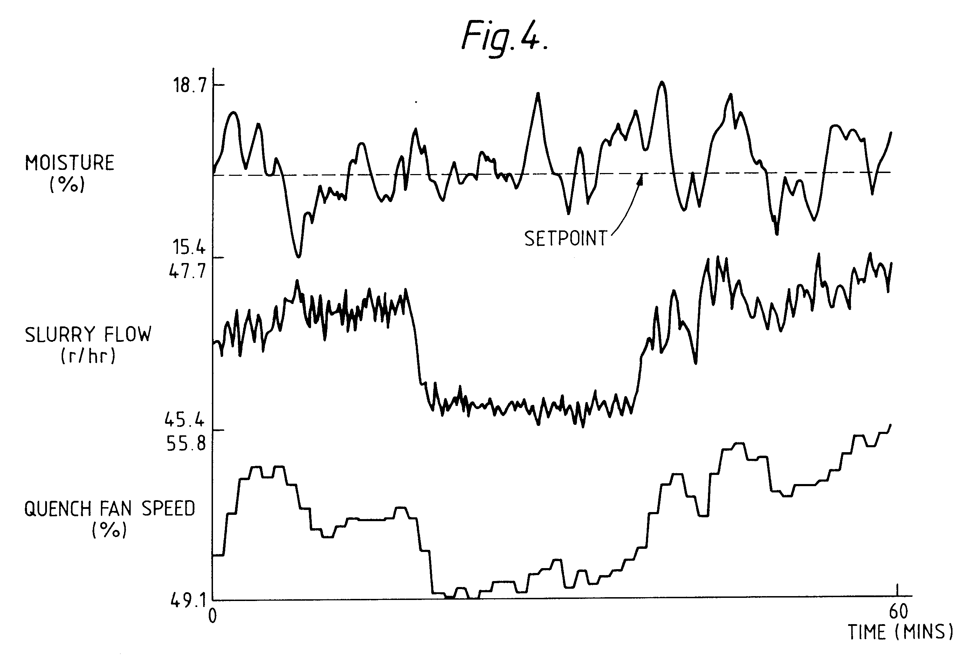

The improvement in control performance obtained when this controller (E2) was used instead of the feed-back only controller (E1) can be seen by comparison of Fig. 3 and Fig. 4. Fig. 3 is a one-hour section of the feed-back-only control trial shown in Fig. 2, during which there were two load changes. Fig. 4 shows a similar period of operation, during which time the feed-back plus feed-forward controller was in operation. It is seen that the moisture deviation from setpoint is significantly less when the feed-forward compensation was in operation. It is surprising that this combined feed-forward and feed-back control system is actually capable of providing such a constant moisture content, in view of the many possible control variables.

The structure and the number of parameters in the controller are dependent upon the complexity of the dynamics of the process, the process time delay and the control interval. Because of the relatively long time delay in this process, the structure of the feed back plus feed-forward controller (E2) was simplified by choosing a control interval of 96 seconds. The resultant controller was (E3):

$$U_t = U_{t-96} + [0.81 \quad 0.002 \quad 0.07] \begin{vmatrix} Y_t & - & W_t \\ Y_{t-32} & - & W_t \\ Y_{t-64} & - & W_t \end{vmatrix}$$

$$+ [-0.31 \quad 0.26 \quad -0.13 \quad -0.17 \quad 0.07] \begin{vmatrix} U_{t-96} & - & U_{t-192} \\ U_{t-192} & - & U_{t-288} \\ U_{t-288} & - & U_{t-384} \\ U_{t-384} & - & U_{t-480} \end{vmatrix}$$

$$+ [1.31 \quad 0.56 \quad 0.29 \quad 0.34 \quad 0.50] \begin{vmatrix} V_t & - & V_{t-96} \\ V_{t-96} & - & V_{t-192} \\ V_{t-288} & - & V_{t-384} \\ V_{t-384} & - & V_{t-480} \end{vmatrix}$$

in which:
$Y_t$ = moisture measurement at time t seconds
$W_t$ = moisture setpoint at time t seconds
$U_t$ = quench fan speed at time t seconds
$V_t$ = slurry flow rate at time t seconds

EXAMPLE 3

A comparison was made between a conventional spray-drying process which is manually controlled by an operator, and the process of the present invention for a better control of moisture content. The following operating conditions were hereby considered:

(i) steady state - meaning a period of operation without major load changes.
(ii) transient - meaning a period of operation when there are major load changes.

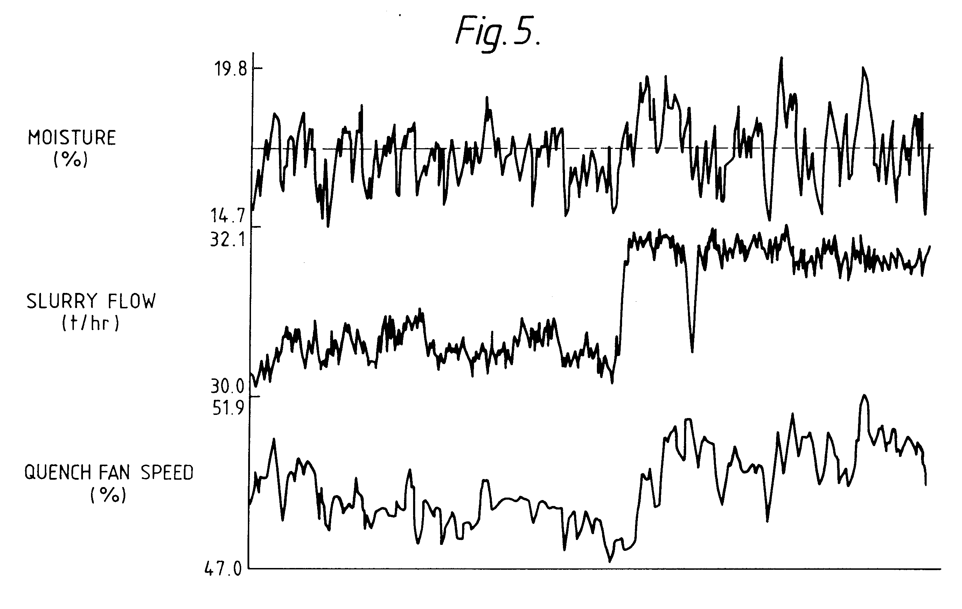

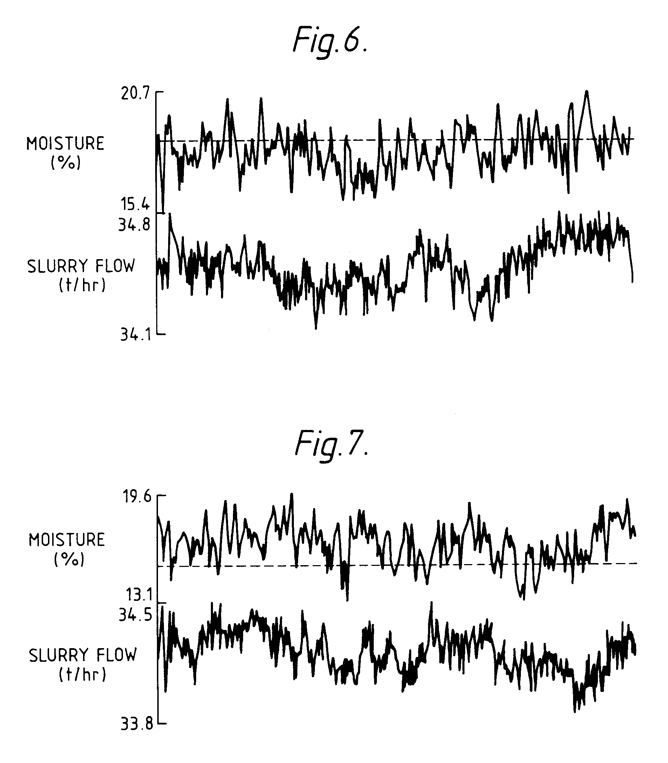

A steady state comparison between the performance of the automatic controller and the previous manual control for tower base moisture is shown in Fig. 5-7, where time histories of moisture and slurry flow are shown for three separate four-hour periods of operation. Fig. 5, which also shows the quench fan speed, illustrates the operation of the moisture controller during the first four-hour period of Fig. 2, where the slurry increased by approximately 1.5 t/hr, corresponding to the addition of one lance. Fig. 6 and 7 show two separate 4-hour periods while the moisture was in manual control without any significant changes in slurry flow. Statistics for the data in Figs. 5-7 are given in the following Table II.

6

TABLE II

| Statistics of Figs. 5-7 | | | |
|---|---|---|---|
| | 4-Hour Computer Control | 4-Hour Manual Control | 4-Hour Manual Control |
| Moisture Setpoint (%) | 17 | 17 | 17 |
| Mean Moisture Content (%) | 16.92 | 16.48 | 17.96 |
| Standard Deviation Moisture | 0.91 | 1.13 | 0.93 |
| Mean Slurry Flow (t/hr) | 34.78 | 34.18 | 34.52 |
| Standard Deviation Slurry Flow | 0.61 | 0.16 | 0.14 |

The standard deviations of the moisture content for each of the periods of operation given in Table II are comparable, whereby the computer controlled process actually had the lowest moisture content standard deviation of 0.91, despite the load change. Surprisingly, however, the moisture content set point of 17 % was significantly best achieved by the computer controlled process, giving a mean moisture content of 16.92% compared with 16.48% and 17.96%, respectively, for the periods of manual control. The main significance of this result is that under manual control the mean moisture content was drifting, in one case 0.52% below setpoint and in the other 0.96% above setpoint. The long-term standard deviation is thus significantly better under automatic control than with manual control.

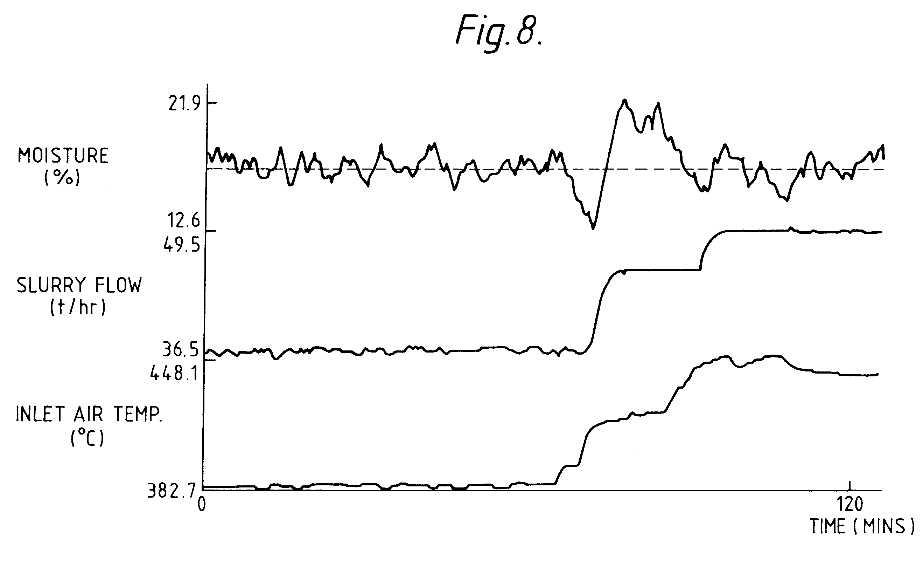

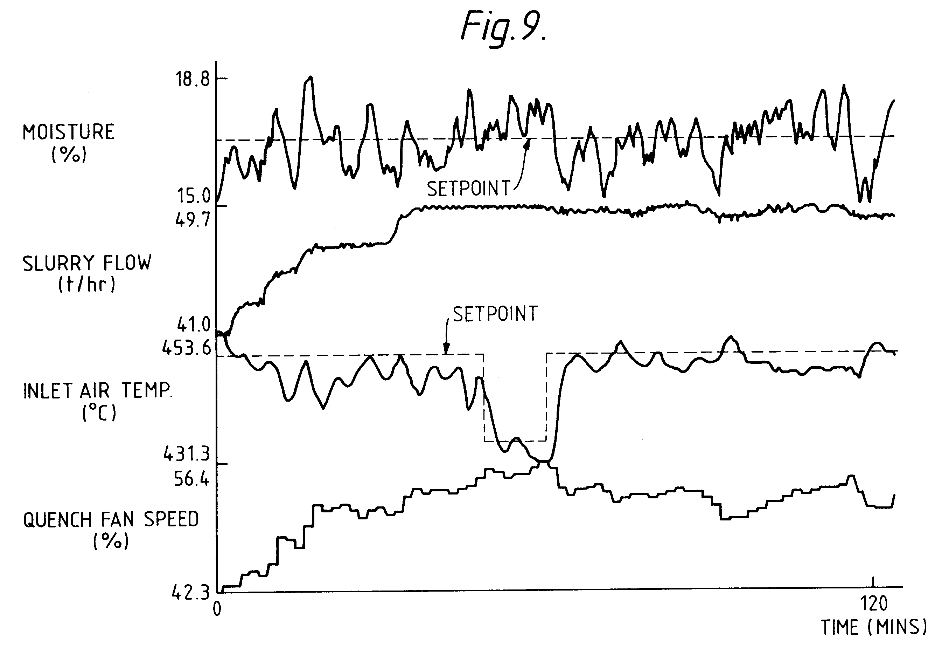

The differences in transient performance of the current manual operation of the plant and the operation using the feed-back plus feed-forward moisture controller can be seen by comparing Fig. 8 with Fig. 9. Fig. 8 shows a two-hour period during which the slurry feed to the tower changed considerably. On this occasion, the operator increased the temperature setpoint (as indicated by the rising air inlet temperature) in anticipation of the load change, leading to an initial period of over-drying, followed by a period of approximately 15 minutes when the moisture content was significantly higher than the setpoint. This behaviour contrasts with that shown in Fig. 9 where the moisture controller according to the present invention was in operation.

## Claims

1. A spray-drying process which comprises feeding an aqueous slurry to a spray drying zone, contacting the slurry with drying air to form a spray dried powder, in which the moisture content of the powder is automatically maintained at a preset level by measuring its actual value and feeding it to a computer which at least controls the temperature and/or flow of the drying air as a function of past values of said flow and/or temperature and as a function of current and past values of the powder moisture content.

2. A process according to claim 1 in which the flow of drying air and/or the temperature thereof is also regulated as a function of current and past values of the slurry flow rate.

3. A process according to any one of the preceding claims in which the computer calculates the flow of drying air and/or the temperature thereof from linear combinations of said current and past values.

4. A process according to any preceding claim in which the moisture content of the powder is measured by infra-red spectroscopy.

5. A process according to any preceding claim for the production of a detergent powder or a component thereof in which the slurry comprises a detergent active compound.

## Patentansprüche

1. Sprühtrocknungsverfahren, welches umfaßt: Zuführen einer wäßrigen Aufschlämmung in eine Sprühtrocknungszone, die Aufschlämmung mit Trocknungsluft in Berührung bringen, um ein sprühgetrocknetes Pulver zu bilden, bei welchem der Feuchtigkeitsgehalt des Pulvers automatisch auf einer voreingestellten Höhe gehalten wird, indem man seinen Istwert mißt und ihn einem Computer eingibt, der mindestens die Temperatur und/oder den Strom der Trocknungsluft in Abhängigkeit von früheren Werten des besagten Stroms und/oder der Temperatur und in Abhängigkeit vom aktuellen und von früheren Werten des Pulverfeuchtigkeitsgehalts steuert.

**2.** Verfahren nach Anspruch 1, bei welchem der Strom der Trocknungsluft und/oder deren Temperatur auch in Abhängigkeit vom aktuellen und von früheren Werten des Aufschlämmungsdurchsatzes geregelt wird.

**3.** Verfahren nach einem beliebigen der vorangehenden Ansprüche, bei welchem der Computer den Strom der Trocknungsluft und/oder deren Temperatur aus linearen Kombinationen der besagten aktuellen und früheren Werte berechnet.

**4.** Verfahren nach einem beliebigen vorangehenden Anspruch, bei welchem der Feuchtigkeitsgehalt des Pulvers durch Infrarotspektroskopie gemessen wird.

**5.** Verfahren nach einem beliebigen vorangehenden Anspruch für die Herstellung eines Waschmittelpulvers oder eines Bestandteils desselben, bei welchem die Aufschlämmung eine waschaktive Verbindung umfaßt.

**Revendications**

**1.** Procédé de séchage par pulvérisation, qui consiste à envoyer une boue aqueuse à une zone de séchage par pulvérisation, amener de l'air de séchage en contact avec la boue pour former une poudre de pulvérisation sèche, dans lequel la teneur en humidité de la poudre est maintenue automatiquement à un niveau préréglé, par mesure de sa valeur actuelle et envoi de cette teneur en humidité à un ordinateur, qui au moins commande la température et/ou le débit de l'air de séchage en fonction de valeurs antérieures dudit débit et/ou de ladite température et en fonction de valeurs actuelle et antérieure de la teneur en humidité de la poudre.

**2.** Procédé selon la revendication 1, selon lequel le débit de l'air de séchage et/ou la température de l'air de séchage sont également réglés en fonction de valeurs actuelle et antérieure du débit de la boue.

**3.** Procédé selon l'une quelconque des revendications précédentes, selon lequel l'ordinateur calcule le débit de l'air de séchage et/ou la température de l'air de séchage à partir de combinaisons linéaires de valeurs actuelle et antérieure.

**4.** Procédé selon l'une quelconque des revendications précédentes, selon lequel la teneur en humidité de la poudre est mesurée par spectroscopie infrarouge.

**5.** Procédé selon l'une quelconque des revendications précédentes pour la production d'une poudre de détergent ou un constituant de cette poudre, dans lequel la boue comporte un composé détergent actif.

Fig.1.

AIR

FC

FLOW
CONTROLLER

SLURRY

FT FLOW
SENSOR

TOWER

AIR
LIFT

QUENCH
AIR

HEATER

TEMPERATURE
CONTROLLER

MT MOISTURE
SENSOR

FEED FORWARD
FROM SLURRY FLOW

COMPUTER
(MOISTURE
CONTROLLER)

MOISTURE
SETPOINT

EP 0 437 888 B1

# Fig.2.

MOISTURE
(%)

21.4

13.6

SLURRY FLOW
(t/hr)

34.9

30.0

QUENCH FAN SPEED
(%)

56.0

45.7

0                                                                                                11

TIME (HOURS)

EP 0 437 888 B1

Fig.3.

MOISTURE
(%)

21.4

13.6

SETPOINT

34.9

SLURRY FLOW
(r/hr)

31.5

56.0

QUENCH FAN SPEED
(%)

48.1

0                                              60

TIME (MINS)

EP 0 437 888 B1

Fig.4.

MOISTURE (%)

18.7

15.4

SETPOINT

47.7

SLURRY FLOW (r/hr)

45.4

55.8

QUENCH FAN SPEED (%)

49.1

0                                                                    60

TIME (MINS)

EP 0 437 888 B1

## Fig.5.

MOISTURE (%)

SLURRY FLOW (t/hr)

QUENCH FAN SPEED (%)

EP 0 437 888 B1

## Fig.6.

## Fig.7.

*Fig.8.*

EP 0 437 888 B1

Fig. 9.